# EUROPEAN PATENT APPLICATION

(11) **EP 1 757 185 A1**
(43) Date of publication of application: **28.02.2007**
(21) Application number: 05107736.0
(22) Date of filing: 23.08.2005
(51) Int. Cl.: A01K 11/00

(54) **An earmarking tool**

(71) Applicant: Mandsfelt & Gamborg A/S, 8410 Roende (DK)
(72) Inventor: Eriksen, Steen Mandsfelt, Denmark, Graested (DK)
(74) Representative: Holme Patent A/S

(57) **Abstract**

An earmarking tool serves for assembling two tag parts (6;7) of an ear tag (27) to an integral unit on an ear (23) of an animal with a tag part (6;8) placed on each side of the ear (23). The tool comprises a base (2), a first an second holder (7;9) of the base (2) for detachable holding the two tag parts (6;8) in initial positions situated at a distance from each other, a punch (24) displaceable mounted on the base (2) between a first position where the tag part (6;8) are in their initial positions and a second position where the tag parts (6;8) during operation has been brought into their assembled positions on the ear (23) by the punch (24) performing a working stroke from its first to its second position, and a transforming mechanism (31,32) arranged on the base (2) for transforming an external power acting upon the tool to a motion power acting upon the punch (24) during its working stroke. The transforming mechanism (31,32) comprises, a toggle joint (32) pivotally connected at one end to the base (2) and at the other end to the punch (24), and a lever (5), which is pivotally connected to a pivot (28) on the base (2) and is consisting of an operation lever portion (29) and a power transmission lever portion (30) extending in each their direction from said pivot. An ear tag can by means of the earmarking tool according to the invention easily and rapidly be mounted on an ear of an animal by using only little energy and without hurting the animal being earmarked. The tool also has a simple and reliable construction.

## Description

### Field of the invention

The invention relates to an earmarking tool for assembling two parts of a tag to an integral unit on an ear of an animal with a tag part placed on each side of the ear and relates also to a method for using the tool.

The earmarking tool comprises more specifically a base, a first and second holder of the base for detachable holding the two tag parts in initial positions situated at a distance from each other, a punch displaceable mounted on the base between a first position where the tag parts are in their initial positions and a second position where the tag parts during operation has been brought into their assembled positions on the ear by the punch performing a working stroke from its first to its second position, and a transforming mechanism arranged on the base for transforming an external power acting upon the tool to a motion power acting upon the punch during its working stroke.

### Background art

Ear tags has been used for years for distinguish animals, e.g. pigs from each other. From the US patent No. 3,731,414 is known such an ear tag, which is consisting of a male and a female tag part. The male tag part has a hollow stem with a barb the end while the female tag part has an undercut opening for integrally accommodating the barb of the male tag part when pressing the two tag parts against each other by means of a tool, e.g. a pliers, thereby safely securing the ear tag on the ear.

A pliers that has two jaws for fitting an ear tag in an ear of an animal is known from the US patent No. 3,812,859. The female tag part is by use placed on one of the jaws while the male part is placed on a protruding pin on the other jaw.

When using the pliers the free end of the pin is piercing the ear of the animal simultaneously with that the jaws are pressing the barb of the male part into the undercut opening in the female tag part placed on the other side of the ear.

The pin of the pliers is however during the earmarking operation moving along a curve and the retraction of the pin moreover is taken place relatively slow since the operator is not able to open his hand, which is holding the handles of the pliers, with the required rate of motion.

These draw backs of the known pliers are hurting the animal being earmarked in a not acceptable way. The work is furthermore strenuous because the animal will try to escape owing to the experienced pain.

A further draw back consist in that it is difficult and time-consuming to place the tag parts in the pliers because its jaws cannot be opened to a sufficient extent.

The European Patent Application No. 0 055 127 describes a tool for earmarking an animal. This tool has a sufficiently large gab between the holders for the ear parts to easily allowing the ear parts to be inserted in the tool. The tool also has a punch with a pin for initially mounting the male ear part. The punch is during the earmarking operation performing a rectilinear working stroke. The speed of the punch is at the beginning of the stroke high while the speed at the end of the stroke is low simultaneously with that the pressure from the punch on the ear tag in the tool has become large. The punch is retracted with high speed when the stroke is completed.

The tool is operated by manually pressing a lever against an opposite handle of the tool. The power, which thereby is exercised upon the tool, is by means of a transforming mechanism of the tool transformed to motion power acting upon the punch during its stroke.

The transforming mechanism of the tool is however complicated and expensive and is moreover arranged in such way that the transmission of the manually exercised power upon the tool to motion power acting upon the punch during its stroke require that the operator need to use very much energy for operating the tool.

Therefore said known tool is a laborious and tiring means for earmarking animals, and especially when many animals are to be earmarked in succession to each other.

The above-mentioned disadvantages of the prior art means for ear marking animals are according to the present invention remedied by,
in a first aspect of the invention providing a tool of the kind mentioned in the opening paragraph by means of which an ear tag easy and rapidly can be mounted on an ear of an animal,
in a second aspect of the invention providing a tool of the kind mentioned in the opening paragraph which can be operated with lesser effort than hitherto known,
in a third aspect of the invention providing a tool of the kind mentioned in the opening paragraph which repeatedly can be used without tiring the operator,
in a fourth aspect of the invention providing a tool of the kind mentioned in the opening paragraph which is hurting the animal being earmarked lesser than hitherto known, and
in a fifth aspect of the invention providing a tool of the kind mentioned in the opening paragraph which has a simple and at the same time reliable functioning construction.

### Summary of the invention

The novel and unique features of the invention consist in the fact that the transforming mechanism comprises a toggle joint pivotally connected at one end to the base and at the other end to the punch, and a lever, which is pivotally connected to a pivot on the base and is consisting of an operation lever portion and a power transmission lever portion extending in each their direction from said pivot.

The operator can by means of this construction operate the tool of the invention by using only very little energy. The tool therefore is comfortable to use.

The tool also operates very fast as the toggle joint quickly is nearly straightened out in the first stage of the operation thereby bringing the two ear parts close to each other. The real assembling of the two tag parts on the ear of the animal can thereupon be carried out by using only little energy because the toggle joint now is brought into a nearly straightened out state.

The operation lever portion and the power transmission lever portion of the lever can in one embodiment according to the invention permanently be stiffly connected to each other.

The two portions of the lever can however in another embodiment according to the invention bee stiffly connected to each other during the working stroke of the punch and pivotally arranged in relation to each other immediately after completing of the stroke.

During the stroke the lever thereby is able to transmit the power, exercised upon the lever by the operator, to the punch after which the stiffly connection between the two portions of the lever is disconnected with the advantage that the power transmission lever portion of the lever now has been able to pivot about the two lever portions common pivot.

The tool can have a tension spring acting between the base of the tool and the power transmission lever portion for bringing this to return the punch to its first position when the connection between the two lever portions has been disengaged.

The punch thereby quickly can be withdrawn from the ear of the animal without harming this.

The detachable connection between the two portions of the lever can simply be a clutch connecting the two lever portions of the lever during the stroke of the punch and disengaging said connection when the stroke has been completed.

### Brief description of the drawing

The object, features and advantages of the invention will in the following be explained in more details with reference to the drawing in which,
Fig. 1 shows the tool according to the invention seen in perspective,
Fig. 2 is a cross section, seen from in front in a larger scale, of a detail of the tool shown in fig. 1 showing two tag parts of an ear tag in their initial positions before being assembled on an ear of an animal,
Fig. 3 shows the same cross section as seen in fig. 2, but with the tag parts in assembled state on the ear of the animal,
Fig. 4 is a lateral cross section of the tool shown in fig. 1, seen in the initial assembling stage,
Fig. 5 shows the same in an intermediate assembling stage,
Fig. 6 shows the same in the finally assembling state,
Fig. 7 shows the same, but immediately after the two tag parts having been assembled on the ear of the animal, and
Fig. 8 shows, in perspective and in a larger scale, a clutch arrangement for detachable connecting two parts of a lever of the tool shown in fig. 1.

### Detailed description of the invention

In the following it is presumed that the tool of the invention is used for fixing a tag on an ear of a pig and that the tag is of the type, which consists of a male tag part and a female tag part.

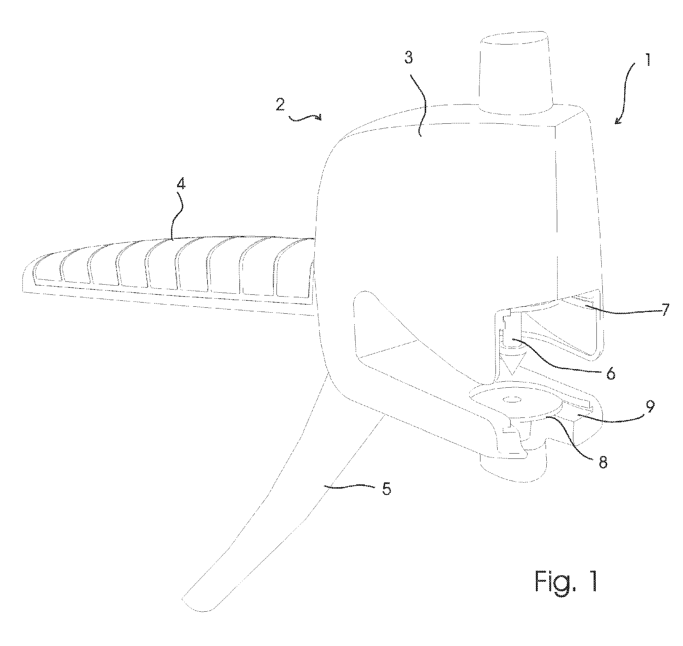

The tool 1, shown in perspective in fig. 1, comprises a base 2, which consists of a main base 3 and a handle 4 integrally connected to the main base. A lever 5 is pivotally mounted on the main base.

A male tag part 6 is detachable placed in an upper holder 7 of the main base 3 and the female tag part 8 in a lower holder 9.

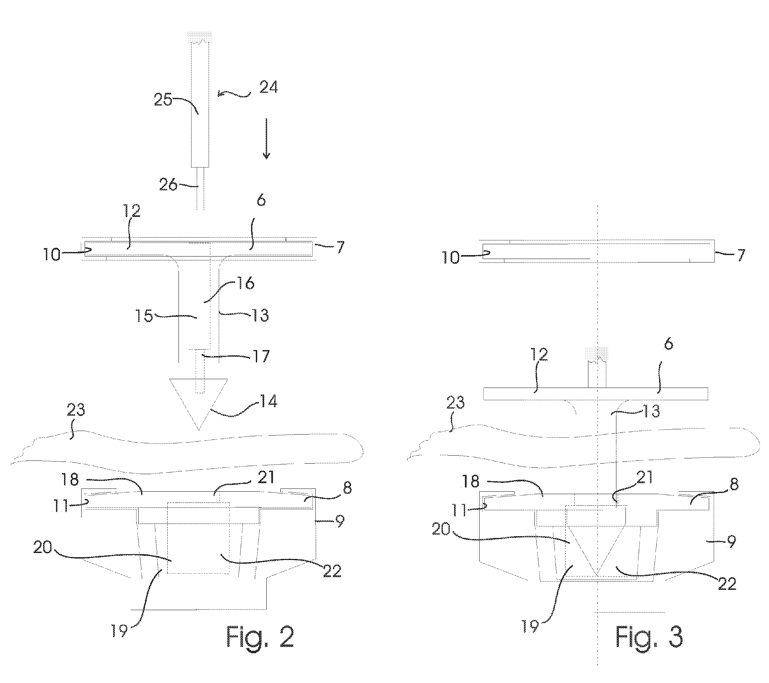

Fig. 2 and 3 shows schematically in a larger scale the male tag part 6 and the female tag part 8 detachable placed in each their respective holders 7 and 9.

The holders 7 and 9 are in this case formed as grooves 10 and 11 in the main base 3 (not shown).

The male tag part 6 comprises a disc 12, a stem 13 and a barb 14 on the stem 13. An axial hole 15 in the male part is debouching into the free. Said hole 15 has an upper section 16 with one diameter and a lower section 17 with a smaller diameter than the diameter of the upper section 16.

The female tag part 8 comprises a disc 18 and a boss 19 extending from the disc 18 and also an axial hole 20, which is debouching into the free. Said hole 20 has an upper section 21 with one diameter and a lower section 22 with a larger diameter than the diameter of the upper section 21. The diameter of the upper section 21 of the hole 20 in the female tag part 8 is furthermore smaller than the largest diameter of the barb 14 of the male tag part 6, while the diameter of the lower section 22 of the hole 20 in the female tag part 8 is similar to or larger than the largest diameter of the barb 14 of the male tag part.

The male tag part 6 is in fig. 2 placed in an initial position in the upper holder 7 ready to be assembled with the female tag part 8 placed in the lower holder 9. An ear 23 of a pig (not shown) has been brought into position between the two ear tag parts 6 and 8.

A punch 24 of the tool has an upper section 25 corresponding to the upper section 16 of the axial hole 15 in the male tag part 6 and a lower section 26 corresponding to the lower section 17 of said axial hole 15.

The punch 24 is, by operating the tool (not shown in fig. 2 and 3), acted upon by a motion power in the direction of the arrow thereby pushing the punch into the hole 15 of the male tag part 6. The punch, still acted upon by said motion power, then will force the male tag part to leave the upper holder 7 and then the barb of the male tag part to penetrate the ear of the pig and engage the lower upper section 22 of the axial hole in the female tag part via the upper section 21 of this.

Subsequently the punch is retracted and the tool removed. The ear tag 27 now is safely secured to the ear 23 with a tag part 6,8 placed on each side of the ear.

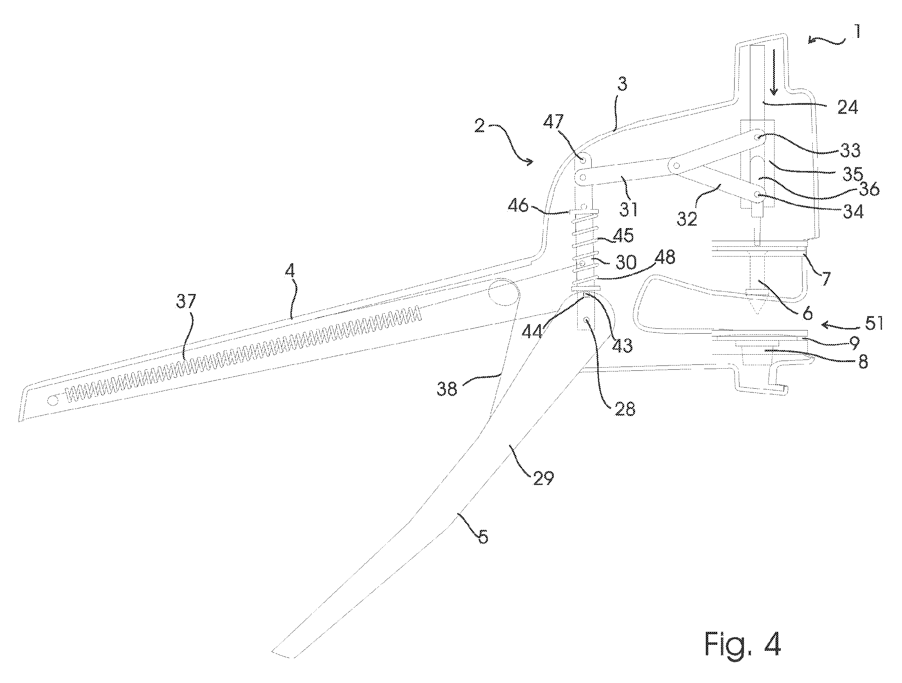

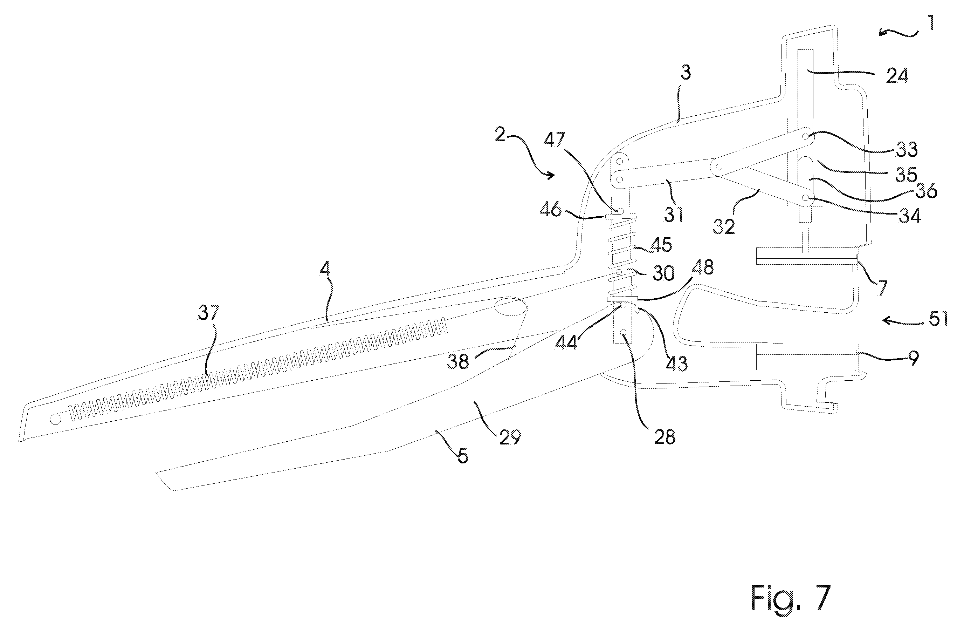

Fig. 4 - 7 shows in section the inventive construction of the tool making it possible to act upon the punch by a motion power as mentioned above with reference to fig. 2 and 3 by manually operating the tool.

The lever 5 of the tool is pivotally mounted on a pivot 28 of the main base 3 of the tool 1. The lever is put together of an operation lever portion 29 and a power transmission lever portion 30 extending in each their direction from said pivot 28.

The operation lever portion 29 is extending outwards from the main basis 3 of the tool and is functioning as a second handle for the tool cooperating in use with the handle 4 of the base.

The power transmission lever portion 30 is extending inwards into the main basis 3 where it is pivotally connected to a linkage 31, which again is pivotally connected to a toggle joint 32.

The toggle joint 32 is at one end pivotally connected to a pivot 33 on the base 3 and at the other end to a pivot 34 on the punch 24.

The punch 24 is sliding mounted in a guide 35 of the base in such way that the punch can be displaced to-and-fro into the axial direction of the axial holes 15 and 20 of the two tag parts 6 and 8 placed in each their holders 7 and 9, respectively. A longitudinal extending slit 36 in each side of the guide allows the pivot 34 to connect the punch 24 and the toggle joint 32.

The linkage 31 consists in this case of two identical parts but can within the scope of the invention also consist of only one single linkage.

The toggle joint 32 consists likewise of two identical parts but can also consist of only one single joggle joint.

A tension spring 37 is moreover attached to the handle 4 at one end and at the other end to the power transmission lever portion 30 of the lever 5. A pressure spring 38 is acting between the handle 4 and the operation lever portion 29 of the lever 5.

The lever 5 is, as mentioned above, put together of an operation lever portion 29 and a power transmission lever portion 30.

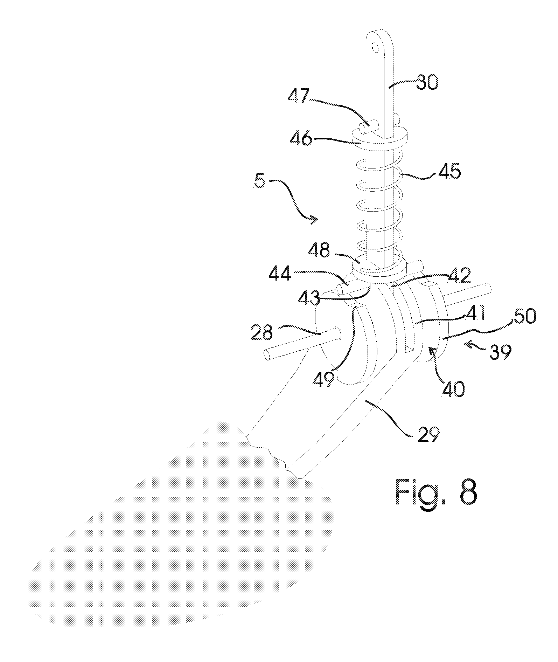

The two portions 29 and 30 are detachable connected by means of a clutch 39, which in fig. 8 is seen in perspective and in a larger scale.

The end part 40 of the operation lever portion 29 is shaped as a fork 40 having a prong 41 on each side of the end part 42 of the power transmission lever portion 30. Each end part 40 and 42 respectively of the two lever portions 29 and 30 is pivotally mounted on their common pivot 28 on the base 3.

In the periphery of each prong 41 of the fork 40 of the operation lever portion 29 of the lever 5 is shaped an incision 43. A pawl 44, shaped in this case as a cylindrical pin, engages, in the operation stage seen in fig. 8, the two incisions 43 simultaneously by extending through a corresponding through hole (not seen in fig. 8) in the end part 42 of the power transmission lever portion 30.

A pressure spring 45 is at one end fixed to the power transmission lever portion 30 by means of a stop disc 46 and a stop pin 47. The opposite end of the pressure spring is via another stop disc 48 acting upon the pawl 44 by a spring power.

The two lever portions 29 and 30 are in the mutual positions shown in fig. 8 stiffly connected to each other. By turning the two lever portions in relating to each other the pawl 44 will meet an abutment 49, which in this case is placed on two discs 50 fixed to the main base 3 of the tool.

Said abutment can however within the scope of the invention also be fixed to the main base in any other appropriate way.

The pawl 44 will, by further turning the two lever portions in relating to each other, be forced out of the engagement with the incision 43 against the spring power of the pressure spring 45 by meeting the abutment 49.

The two lever parts 29 and 30 now are no longer stiffly connected to each other but can on the contrary turn in relation to each other.

The tool of the invention functions in the following way.

The ear tag parts 6 and 8 have in fig. 4 been inserted into their respective holders 7 and 9. This part of the operation takes place easily and comfortable as the tool is formed with a relatively large gab 51.

The tool is in the initial operation stage shown in fig. 4 ready for the assembling of the two ear tag parts 6 and 8.

The operator is, by operating the tool, pressing the handle 4 of the base 2 and the lever pivotally mounted on the main base 3 against each other with his hand (not shown), thereby acting upon the tool with an external power.

The two lever portions 29 and 30 are stiffly connected to each other by means of the clutch 39 as the pawl 44 of the clutch is engaging with the incision 43 in the prongs 41 of the fork 40 of the operation lever portion 30.

The toggle joint 32 is in the initial operation stage shown in fig. 4 in a very folded position.

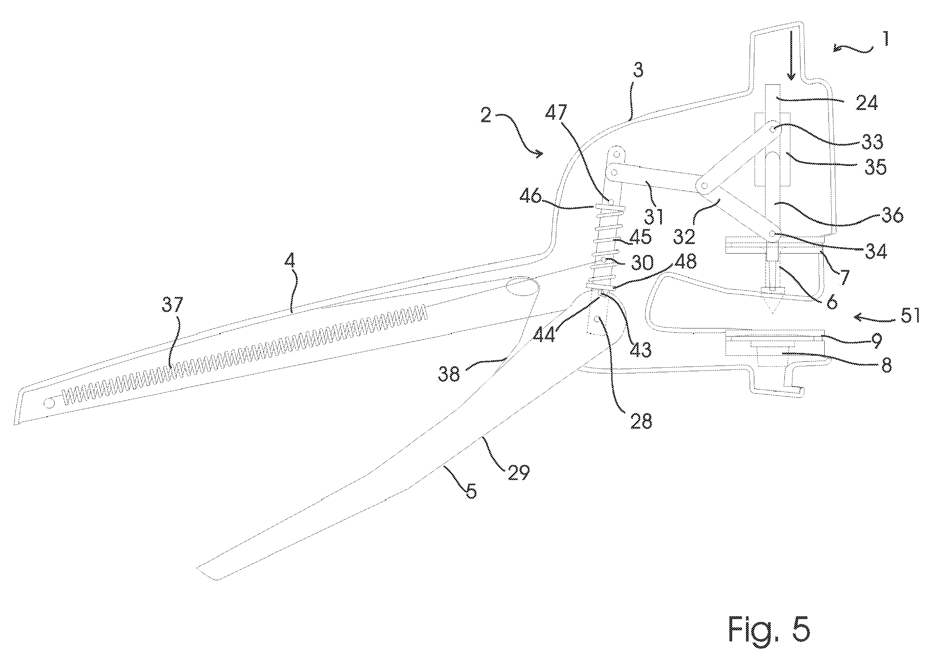

The handle 4 and the lever 5 are in fig. 5 manually pressed together with a power acting upon the tool. The external power is from the lever 5 via the linkage 31 and the toggle joint 32 transmitted to motion power acting upon the punch 24 in the direction of the arrow.

The toggle joint is thereby brought to a something unfolded position with the result that the punch is pushed into the axial hole 15 of the male tag part 6.

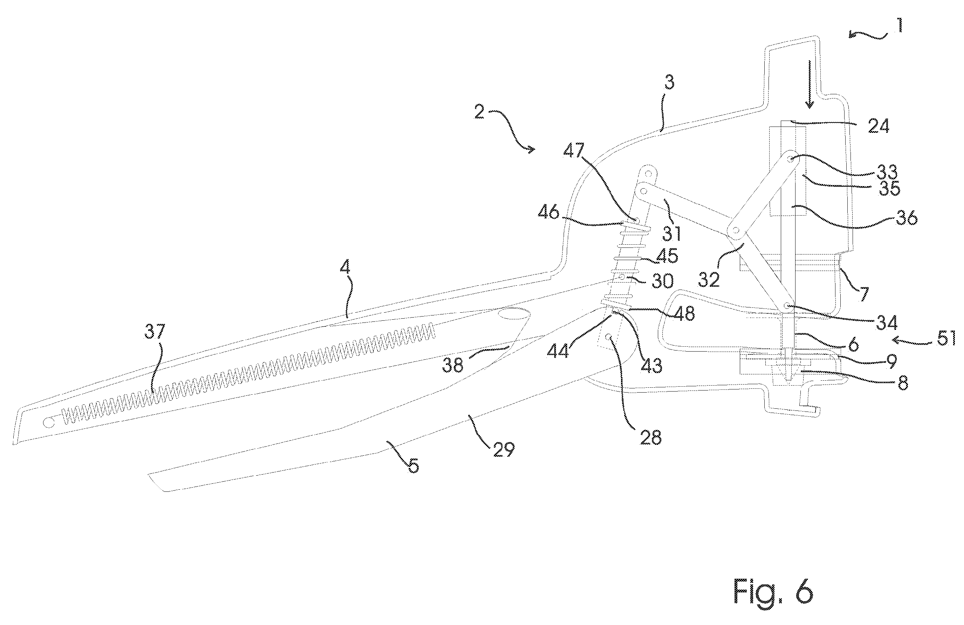

The handle 4 and the lever 5 are in fig. 6 clamped nearly as much as possible together. The punch has thereby forced the male tag part 6 to leave the upper holder 7 and the barb of the male tag part to penetrate the ear of the pig and to engage the lower upper section 22 of the axial hole in the female tag part 8 via the upper section 21 thereby uniting the two ear tag parts 6 and 8 to an integral ear tag 27 having a tag part placed on each of the ear.

The pawl 44 will, by clamping the handle 4 and the lever 5 a little more together, straighten the toggle joint so much that the pawl 44 is forced out of the engagement with the incision 43 by engaging the abutment 49.

The two lever parts 29 and 30 now is allowed freely to turn in relation to each other resulting in that the spring power of the tension spring 37 automatically is retracting the power transmission lever portion 30 of the lever 5 and thereby the punch 24 to their initial positions seen in fig. 4.

The tool now can be removed from the ear of the pig, which practically is not harmed by the above-described careful earmarking operation carried out by means of the tool according to the invention.

The tool is brought ready for a new earmarking operation by only letting the lever 5 turn into its initial position shown in fig. 4 acted on by the pressure spring 38.

The gab 51 between the two holders 7 and 9 of the tool is, as mentioned above, relatively large for thereby enabling the operator easily and comfortable to insert the tag parts 6 and 8 in the holders.

The assembling of the two tag parts can however first take place when the punch 24 has traversed said large gab 51 during the earmarking operation.

The toggle join 32 is however, in the initial position shown in fig. 4, in a very unfolded position. A relatively little turning of the lever 5 in relation to the handle 4 therefore results in a relatively large displacement of the punch 24 of the tool.

That implies that the punch rapidly is displaced forwards to the assembling position when operating the tool and even faster is retracted when the assembling of the ear tag parts has taken place.

The displacement forward of the punch to the assembling position requires nearly no energy as the punch is not loaded by any reaction power.

The toggle joint 24 is, during assembling of the two tag parts 6 and 8, in a straightened position where the gearing between the lever 5 and the toggle joint 24 is very large.

Acting upon the lever with only a slight power therefore advantageously implies that the punch 24 is acting upon the ear tag parts with a power sufficiently large to easily being able to assemble the parts.

So taking it all in all the tool according to the invention requires only minor energy to be operated in relation to the energy required when using the known technique. Working with the tool therefore is a comfortable experience. The operator will not be strained or tired when using the tool, even if earmarking more pigs in succession with the tool.

## Claims

1. An earmarking tool for assembling two tag parts (6;7) of an ear tag (27) to an integral unit on an ear (23) of an animal with a tag part (6;8) placed on each side of the ear (23), comprising,
- a base (2),
- a first an second holder (7;9) of the base (2) for detachable holding the two tag parts (6;8) in initial positions situated at a distance from each other,
- a punch (24) displaceable mounted on the base (2) between a first position where the tag part (6;8) are in their initial positions and a second position where the tag parts (6;8) during operation has been brought into their assembled positions on the ear (23) by the punch (24) performing a working stroke from its first to its second position, and
- a transforming mechanism (31,32) arranged on the base (2) for transforming an external power acting upon the tool to a motion power acting upon the punch (24) during its working stroke,
**characterized in that** the transforming mechanism (31,32) comprises,
- a toggle joint (32) pivotally connected at one end to the base (2) and at the other end to the punch (24), and
- a lever (5), which is pivotally connected to a pivot (28) on the base (2) and is consisting of an operation lever portion (29) and a power transmission lever portion (30) extending in each their direction from said pivot.

2. An earmarking tool according to claim 1, **characterized in that** the two lever portions (29,30) is power transmission connected during the working stroke of the punch (24) by means of a clutch (39) arranged for being disengaged at the end of said stroke.

3. An earmarking tool according to claim 2, **characterized in that** the clutch (39) comprises a pawl (44) placed on one of the lever portions (29;30) and engaging during the working stroke of the punch (24) a recess (43) in the other lever portions (29;30) and that the pawl (44) at the end of the working stroke is disengaged from the recess (43)by engaging an abutment on the base (2).

4. An earmarking tool according to claim 3, **characterized in that** the pawl (44) is a spring-loaded pin placed in a slit in the power transmission lever portion (30) of the lever (5) and that the recess (43) is formed as a corresponding incision (43) in the operation lever portion (29) of the lever (5).

5. An earmarking tool according to any of the claims 1 - 4, **characterized in that** the power transmission lever portion (30) of the lever (5) is directly or indirectly connected to the toggle joint (32).

6. An earmarking tool according to any of the claims 1 - 5, **characterized in that** the transforming mechanism (31,32) comprises a linkage (31) which is pivotally connected to both the power transmission lever portion (30) of the lever (5) and the toggle joint (32) and that the toggle joint (32) is arranged in such way that the distance between the two ends of the toggle joint (32) is increasing during the working stroke of the punch (24).

7. An earmarking tool according to any of the claims 1 - 6, **characterized in that** the base (2) has a elongate protrusion (4) shaped like a fix handle (4) which in corporation with the pivotally operation lever portion (29) of the lever (5) makes the tool (1) functioning like a pliers.

8. An earmarking tool according to any of the claims 1 - 7, **characterized in that** the tool (1) comprises a tension spring which at one end is fixed to the power transmission lever portion (30) of the level (5) and at the other end to the elongate protrusion (4) of the base (2).

9. An earmarking tool according to any of the claims 1 - 8, **characterized in that** the tool (1) comprises a tension spring (37) for bringing the clutch (39) from a disengaged to an engaged state.

10. An earmarking tool according to any of the claims 1 - 9, where the two tag parts (6;8) of the tag (27) each is formed with a disc (12;18), **characterized in that** each holder (7;9) of the base (2) for detachable holding one of the tag part (6;8) in an initial position is formed with a groove (10;11) for receiving at least a part of the corresponding tag disc (12;18) at the periphery of this.

11. An earmarking tool according to claim 10, **characterized in that** each groove (10;11) has an opening for introducing the disc (12;18) and that the width of the groove (10;11) is smaller than the diameter of the disc (12;18) of the respective tag part (6;8) at least at the introduction opening of the groove (10;11).

12. An earmarking tool according to any of the claims 1 - 11, where one of the tag part (6;8) is a male tag part (6) having an axial hole (15) and a stem (13) with a barb (14) at the free end and where the other tag part (6;8) is a female tag part (8) having an undercut axial hole (20) for securely accommodating the barb (14) when assembling the tag, **characterized in that** the punch (24) is equipped with a protruding pin (26)(26) fitting into the axial hole (15) of the male tag part.

13. An earmarking tool according to any of the claims 1 - 12, **characterized in that** the punch (24) is mounted in a guide (35) of the base (2) in such way that it during a stroke is displaced into the axial direction of the axial holes (15;20) of the two tag part (6;8).

14. A method for using the tool (1) according to claim 1-13, for animal identification.

15. A method according to claim 14, **characterized in, that** the animal is a pig.

16. A method according to claim 15 or 16, said method comprising the following steps:
- placing the mail ear tag part (6) in the upper holder (7) of the tool (1) and the female ear tag part (8) in the lower holder (9) of the tool (1),
- introducing an ear (23) of an animal in between the two holders (7;9),
- manually clamping the lever (5) and the elongate protrusion (4) of the base (2) together for via the mechanism (31;32) of the tool (1) acting upon the punch (24) with a motion power into the direction of the ear tag parts (6;8),
- further clamping the lever (5) and the elongate protrusion (4) of the base (2) together for by means of the said motion power bringing the punch (24) to force the male tag part out of the upper holder (7) and the barb (14) of the male tag part (6) to penetrate the ear (23) of the pig and by engagement with the female tag part (8) assemble the two ear tag part (6;8) to an integral ear tag (27) having a tag part (6; 8) on each side of the ear (23) of the animal,
- still further clamping the lever (5) and the elongate protrusion (4) of the base (2) together for disengaging the clutch (39) of the lever (5) and thereby allowing the punch (24) to immediately being retracted by means of the spring power from the tension spring (37) acting between the elongate protrusion (4) of the base (2) and the power transmission lever portion (30) of the lever (5),
- removing the tool (1) from the ear (23) of the animal, and
- letting the pressure spring, which is acting between the elongate protrusion (4) of the base (2) and the lever (5) turn this to its initial position in the tool (1) .
